# EUROPEAN PATENT APPLICATION

(11) **EP 0 675 609 A2**
(43) Date of publication of application: **04.10.1995**
(21) Application number: 95302140.9
(22) Date of filing: 30.03.1995
(51) Int. Cl.: H04B 7/08

(54) **Digital radio communication with low quality reception modification**

(30) Priority: 31.03.1994 JP 63622/94
(71) Applicant: SONY CORPORATION, Tokyo (JP)
(72) Inventor: Suzuki, Mitsuhiro , c/o Sony Corporation, Tokyo (JP); Terashima, Kazuhiko, c/o Sony Corporation, Tokyo (JP)
(74) Representative: Nicholls, Michael John

(57) **Abstract**

A digital radio communication apparatus which sets a digital radio communication circuit for radio communication of digital data between a base station and the apparatus to perform communication includes a reception unit, a decoder, an audio reproducing unit, a quality detection unit, a notification unit and a controller. The decoder decodes a signal received from the reception unit to separate the signal into audio data and control data and converts the audio data into an analog audio signal. The audio reproducing unit converts the analog audio signal from the decoder into a sound and reproduces the sound. The quality detection unit detects quality of a radio communication circuit on the basis of an output signal from the reception unit. The notification unit notifies a speaker of deterioration of the circuit quality. The controller is supplied with the detection signal from the quality detection unit and drives the notification unit to notify the speaker of deterioration of the circuit quality when the radio communication circuit is set between the base station and the apparatus for communication and the quality detection unit detects the deterioration of the circuit quality.

## Description

### BACKGROUND

### 1.Field of the Invention:

The present invention relates to a digital radio communication apparatus, and more particularly, to a digital radio communication apparatus for carrying out a radio communication of digital data with a base station.

### 2.Background of the Invention:

As a radio communication apparatus for carrying out radio communication, various kinds of systems have been developed. Any system of the wireless telephone apparatus as a radio communication apparatus using the radio communication is fundamentally a system for carrying out communication by means of a base station. That is, a telephone circuit for radio communication is set between the base station which is connected to an exchange office side through a wired telephone circuit and a wireless telephone apparatus as a terminal side, so that a telephone conversation is carried out between an opponent side connected through the exchange office and the wireless telephone apparatus.

As the wireless telephone apparatus as such a terminal side equipment, there have been proposed a portable wireless telephone arranged to have a small size, a wireless telephone for an automobile which is installed in an automobile, and so on.

In a wireless telephone system utilizing such a wireless telephone apparatus, communication between the base station and the terminal side telephone apparatus has been carried out by a wireless transmission of an analog signal. Conversely, in order to utilize a transmission band efficiently, development has been made on a wireless telephone system in which communication is carried out between the base station and the terminal side by means of a radio transmission of digital data.

By the way, when telephone conversation is carried out by using the wireless telephone system, it is presupposed that the wireless telephone of the terminal side is placed within an area in which signal transmission and a reception can be effected with the base station, i.e., a service area. Further, though it is placed within the service area, if there is a relatively long distance to the base station such as when it is located in the vicinity of the edge portion of the service area or when the communication condition with the base station is not satisfactory because of presence of an obstacle such as a building or the like, the radio communication condition for the telephone conversation can be deteriorated, resulting in noise appearing in a voice of the telephone conversation, cut-off of the telephone circuit in the midst of the telephone conversation.

In the above described wireless telephone system in which a wireless transmission is carried out by means of an analog signal, if the communication condition is bad, a waveform of an audio signal to be transmitted can be distorted, and a noise can appear in the voice in the telephone conversation which is transmitted from the opponent. The noise generation condition is substantially proportional to the deterioration of the communication condition, and it is supposed that much the noise is, also worse the communication condition is. Furthermore, if the communication condition becomes so deteriorated that it is impossible to make synchronization with a signal from the base station, then the telephone machine in the terminal side determines that the communication with the base station becomes impossible. Thus, it carries out a process that the telephone circuit having been set is cut off.

Therefore, when, for example, a portable wireless telephone machine for use with an analog circuit is used, and the communication condition with the base station becomes deteriorated due to a presence of an obstacle such as a building or the like, it is possible for a communication to determine that the communication condition is bad by the noise appearing in the voice in the telephone conversation. As a result, the communicator can move the position of the portable telephone at that place to a place in which the noise can be reduced or the like. That is, the communicator having the portable wireless telephone apparatus or the telephone apparatus can move to a place in which satisfactory communication condition is obtained. Thus, it is possible to improve the condition to produce a satisfactory condition, and moreover, to prevent such an accident from happening that the circuit is cut off during the telephone conversation.

Conversely, in the case of a wireless telephone system of a digital circuit in which digital data is transmitted, it has been difficult to deal with such deterioration of the communication condition when the above-described analog circuit is utilized. That is, in case of digital data, since an error correction code is added to the audio data which has been digitized, even if the communication condition is considerably bad, the voice to be transmitted can be reproduced satisfactorily in a condition with no noise. Thus, when the deterioration of the communication condition appears, it becomes difficult to make synchronization with the signal from the base station, and a process for cutting off the telephone circuit by the telephone machine is done in the terminal side, though the voice itself in the telephone conversation has been maintained to be relatively good, the circuit is abruptly cut off.

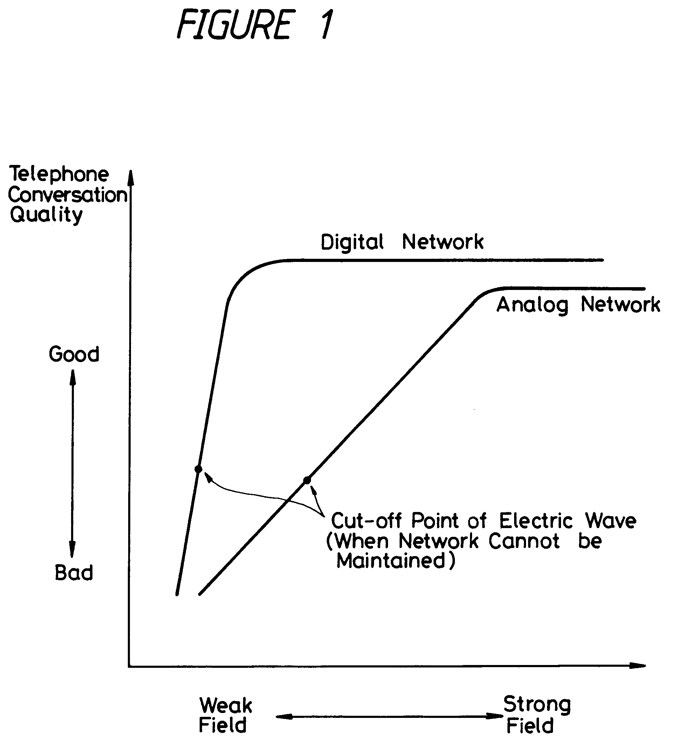

FIGURE 1 shows a correlation between a field intensity of a received signal and a quality of a telephone conversation in a wireless telephone system. As shown in FIGURE 1, in case of an analog circuit in which an analog signal is transmitted in a wireless fashion, an amount of noise generation or the like increases in proportion to the weakness of the field intensity of the received signal, leading to the deterioration of telephone conversation quality. When the quality becomes bad to a certain degree, the wireless telephone circuit is cut off. Conversely, in case of a digital circuit in which digital data is transmitted in a wireless fashion, substantially constant satisfactory telephone conversation quality can be maintained just until the field intensity of the received signal becomes so weak as to cut off the circuit. Thus, the deterioration of the telephone conversation quality and the cut-off of the circuit appear substantially at the same time.

As described above, in case of the digital circuit, it is difficult to guess the communication condition from the voice in the telephone conversation. Therefore, it is difficult for the telephone machine or the communicator to a place in which the communication condition is satisfactory before the circuit is cut off, thereby to avoid the condition that the circuit is cut off, as in the case of the portable telephone machine utilizing the analog circuit. Further, since the circuit is abruptly cut off in spite of the fact that the voice condition has been maintained satisfactory so far, the communicator in the telephone conversation cannot understand why the circuit is cut off, leading to a misjudgment that the telephone machine or the like is out of order.

### SUMMARY OF THE INVENTION

It is therefore an object of the present invention to provide a digital radio communication apparatus which solves the above-mentioned problem.

It is another object of the present invention to provide a digital radio communication system which solves the above-mentioned problem.

According to the present invention, there is provided a digital radio communication apparatus which sets a digital radio communication circuit for a radio communication of digital data between a base station and said apparatus to perform communication. The digital radio communication apparatus includes reception means, quality detecting means and notification means. The quality detection unit detects quality of the radio communication circuit on the basis of an output signal from the reception unit. The notification unit notifies a speaker of deterioration of the circuit quality on the basis of a detection signal from the quality detecting means. The notification means notifies the speaker of deterioration of said circuit quality when the radio communication circuit is set for communication through the base station and the quality detecting means detects the deterioration of the circuit quality.

According to the present invention, there is provided a digital radio communication apparatus which sets a digital radio communication circuit for radio communication of digital data between a base station and the apparatus to perform communication. The digital radio communication apparatus includes the reception unit, a decoder, an audio reproducing unit, the quality detection unit, the notification unit and a controller. The decoder decodes a signal received from the reception unit. The audio reproducing unit converts the audio signal from the decoder into a sound and reproduces the sound. The quality detection unit detects quality of a radio communication circuit on the basis of an output signal from the reception unit. The notification unit notifies a speaker of deterioration of the circuit quality. The controller is supplied with the detection signal from the quality detection unit and drives the notification unit to notify the speaker of deterioration of the circuit quality when the radio communication circuit is set between a base station and the apparatus for communication and the quality detection unit detects the deterioration of the circuit quality.

According to the present invention there is provided a digital radio communication system including a base station and at least one communication terminal connected through to the base station through the digital communication circuit. The base station includes a first reception unit, a first quality detection unit and a first transmission unit. The first quality detection unit detects the quality of the above-mentioned circuit on the basis of an output signal from the first reception unit. The first transmission unit transmits a detection signal from the first quality detection unit and audio data. The communication terminal includes a second transmission unit, a second reception unit, a second quality detection unit, a control unit and a notification unit. The second transmission unit transmits digital data including the audio data to the first reception unit. The second reception unit receives a signal transmitted from the first transmission unit. The second quality detection unit detects the quality of the above-mentioned circuit on the basis of an output signal from the second reception unit. The control unit is supplied with a detection signal from the first quality detection unit of a received signal from the second reception unit. The notification unit is supplied with a detection signal from the second quality detection unit or a detection signal from the first quality detection unit supplied from the control unit. The notification unit notifies a speaker of deterioration of the circuit quality on the basis of the detection signal supplied from the first or second quality detection unit when a digital radio communication circuit is set between the base station and the communication terminal for communication through the base station.

According to the present invention, when the circuit quality of the radio communication circuit is deteriorated in a communication state, it is possible to notify the speaker of deterioration of the circuit quality. Therefore, even in the case of digital radio communication circuit, it is possible for the speaker to grasp the deterioration of the circuit quality and to avoid the interruption of the circuit.

### BRIEF DESCRIPTION OF THE DRAWINGS

FIGURE 1 is a diagram used to explain a correlation between a reception electric field intensity of a radio telephone system and a communication quality thereof;
FIGURE 2 is a block diagram showing an arrangement of a radio communication apparatus according to a first embodiment of the present invention;
FIGURE 3 is a characteristic diagram showing a circuit interrupted state in case of a digital radio communication apparatus;
FIGURE 4 is a characteristic diagram showing a relation between the reception electric field intensity and a bit error rate;
FIGURE 5 is a block diagram showing an arrangement of a bit error detection circuit of the digital radio communication apparatus according to a second embodiment of the present invention;
FIGURE 6 is a block diagram showing an arrangement of a synchronizing-word-disagreement detection circuit of the digital radio communication apparatus according to a third embodiment of the present invention;
FIGURE 7 is a block diagram showing an arrangement of a likelihood detection circuit of the digital radio communication apparatus according to a fourth embodiment of the present invention.
FIGURE 8 is a characteristic diagram showing a correlation between a likelihood and a circuit quality;
FIGURE 9 is a block diagram showing an arrangement of a error-correction-number detection circuit of the digital radio communication apparatus according to a fifth embodiment of the present invention;
FIGURE 10 is a diagram used to explain a zone forming state of the radio telephone system;
FIGURE 11 is a timing diagram showing an electric-field measurement state of a circumference zone;
FIGURE 12 is an explanatory diagram showing a relation of the circuit quality and strength of an oscillation sound;
FIGURE 13 is an explanatory diagram showing a relation of the circuit quality and a pitch of an oscillation sound;
FIGURES 14A to 14C are timing charts showing an example of a state that an oscillation pattern of the oscillation sound is changed;
FIGURES 15A to 15C are timing charts showing another example of a state that an oscillation pattern of the oscillation sound is changed;
FIGURES 16A to 16C are timing charts showing further another example of a state that an oscillation pattern of the oscillation sound is changed;
FIGURES 17A to 17C are timing charts showing an example of a state that an oscillation period of the oscillation sound is changed;
FIGURES 18A to 18C are timing charts showing an example of a state that an oscillation duty of the oscillation sound is changed;
FIGURE 19 is an explanatory diagram showing a relation between the circuit quality and intensity of light;
FIGURE 20 a block diagram showing an arrangement of a silent-portion detection circuit;
FIGURES 21A to 21D are timing charts showing an example of a state the oscillation sound and a noise are generated when a silent portion is detected; and
FIGURE 22 is a block diagram showing a state of communication between a base station and a terminal side.

### DESCRIPTION OF THE PREFERRED EMBODIMENTS

One embodiment of the digital radio communication apparatus according to the present invention will hereinafter be described in detail with reference to drawings.

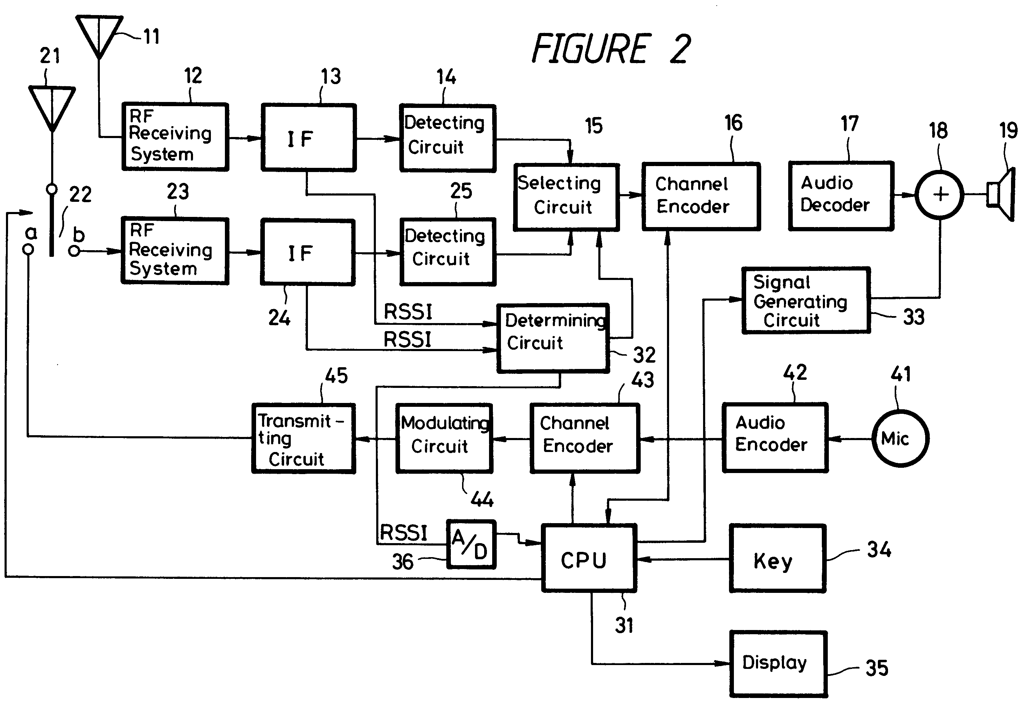

In the embodiment described below, description will be made as a digital radio communication apparatus in which the present invention is applied to a portable wireless telephone apparatus for carrying out radio communication of digital data with a base station. FIGURE 2 shows the digital wireless telephone apparatus according to the first embodiment of the present invention.

In FIGURE 2, reference numerals 1 and 21 represent antennas, respectively. One antenna 11 is an antenna exclusively used for reception, and the other antenna 21 is an antenna serving for transmission and reception. A signal received by the antenna 11 is fed to an RF (radio frequency) receiving system circuit 12, and a transmission signal of a predetermined frequency band transmitted as a down-link channel from the base station is received and processed by the RF receiving circuit 12 to produce an intermediate frequency signal by conversion. Further, a signal received by the antenna 21 is fed through an antenna change-over switch 22 which is connected to a terminal of b-side in FIGURE 2, to an RF receiving system circuit 23. The signal received by the antenna 21 is received and processed within a predetermined frequency band from the base station by the RF receiving system circuit 23, thereby to convert into an intermediate frequency signal. The signal that is received and processed by the respective RF receiving system circuits 12, 23, is, for example, a frequency of 800MHz band or 1.5 GHz band of a transmission signal, and both of the RF receiving system circuits 12, 23 receive and process signals of the same frequency (channel). This receiving frequency (receiving channel) is set on the basis of the control of a central processing unit which will be described later. By the way, the antenna change-over switch 22 is changed over on the basis of the control signal from the central processing unit such that a transmission signal from the transmission circuit described later is supplied to the antenna 21 upon transmission and the received signal from the antenna 21 is supplied to the RF receiving system circuit 23 upon reception, respectively.

Then, the intermediate frequency signals output from the RF receiving system circuits 12 and 23 are fed to intermediate frequency circuits (IF circuit) 13 and 24, respectively, in which intermediate frequency processings such as an amplification or the like are carried out, respectively. In this case, the intermediate frequency circuits 13 and 24 are arranged to detect levels of the supplied intermediate frequency signals (i.e., field intensity of a received signal: RSSI) and output the same.

The received signals which have been subjected to the intermediate frequency processing in respective intermediate frequency circuits 13 and 24 are fed to detection circuits 14 and 25, respectively, and they are detected and demodulated by the detection circuit 14 and 25, respectively. Then, the received signals demodulated by the respective detection circuits 14, 25 are fed to a selecting circuit 15. The selecting circuit 15 is a circuit for selecting a satisfactory signal from the supplied two system received signals, and the selection operation of the selecting circuit 15 is carried out on the basis of the control signal from a field intensity discriminating circuit 32. The field intensity discriminating circuit 32 is supplied with detecting signals of the receiving electric field intensity from the respective intermediate frequency circuits 13 and 24, discriminates a receiving system having a higher field intensity of the received signal. The discriminated result discriminated by the received field intensity discriminating circuit 32 is supplied to the selecting circuit 15. Then, the selecting circuit 15 carries out a processing of selection that is made on the received signal of the receiving system having the higher received electric field intensity which was discriminated by the field intensity discriminating circuit 32, and outputs the same. In this way, since the processing of selection that is made on the receiving systems of two systems is carried out, a so-called diversity reception can be carried out.

The received modulated signal selected by the selecting circuit 15 is fed to a channel decoder 16. The channel decoder 16 is a circuit for extracting and decoding audio data and control data from data transmitted in accordance with the digital communication system to which the wireless telephone apparatus is applied. The channel decoder 16 carries out decode processing on the basis of the control of a central processing unit (CPU) 31 for controlling the whole of the wireless telephone apparatus. The decoded control data decoded by the channel decoder 16 is fed to the central processing unit 31. By the way, the central processing unit 31 is formed of a microcomputer.

The audio data extracted by the channel decoder 16 from the received data is supplied to an audio decoder 17. The audio decoder 17 carries out a decode processing on the audio data supplied thereto in accordance with the communication system, and also carries out processing for converting the decoded audio data into an analog audio signal. The converted analog audio signal converted by the audio decoder 17 is supplied through a mixer 18 to a speaker 19 and the speaker 19 emanates it as an audible voice.

The wireless telephone apparatus has provided a signal generating circuit 33 for generating an oscillation sound, a pseudo noise or the like on the basis of the control signal from the central processing unit 31. A signal generated from the signal generating circuit 33 is fed to the mixer 18 and it is mixed and added by the mixer 18 to the audio signal which is to be supplied to the speaker 19. Thus, the speaker 19 emanates the oscillation sound or the like as an audible tone.

In FIGURE 2, reference numeral 41 represents a microphone. A voice picked up by the microphone 41 is fed to an audio encoder 42. The audio encoder 42 converts the analog audio signal supplied from the microphone 41 into digital audio data, and encodes the converted digital audio data into audio data in accordance with the communication system. The digital audio data encoded by the audio encoder 42 is fed to a channel encoder 43, in which it is encoded into a channel in accordance with the digital communication system to which the wireless telephone apparatus is applied, together with the control data or the like supplied from the central processing unit 31. Then, the data encoded by the channel encoder 43 is supplied to a modulating circuit 44 in which a digital modulation processing in accordance with the communication system is carried out. Then, the signal modulated by the modulating circuit 44 is converted into a transmission signal of a predetermined frequency band (800 MHz band or 1.5 GHz band) by a transmitting circuit 45, and the transmitted signal is transmitted through the antenna change-over switch 22 and from the antenna 22 for transmission and reception in a wireless fashion. At this time, the antenna change-over switch 22 is connected to a terminal of an a-side in FIGURE 2 on the basis of the control signal output from the central processing unit 31.

The digital communication system to which the wireless telephone apparatus of the first embodiment is applied is a time division multiplex connecting system in which the transmission timing and reception timing are set differently in timing. As a modulation system for a transmitted signal, a phase shift keying such as π/4 shift DQPSK modulation or the like is applied.

The wireless telephone apparatus of the first embodiment has provided a key 34 for a number or the like for inputting a dial number or the like upon calling and a display unit 35 for displaying an operating condition, the dial number or the like. When input operating information of the key 34 is supplied to the central processing unit 31, a calling operation or the like and various displays are made on the display unit 35 on the basis of the control signal from the central processing unit 31. Further, the display unit 35 comprises a display unit formed of a liquid crystal panel for displaying a character, a numeral and so on and a pilot lamp for displaying a communication condition, which will be described later. This pilot lamp is formed of one or a plurality of light emission diodes.

Further, of the field intensities of the received signal discriminated by the field intensity discriminating circuit 32, the detected signal having a higher received field intensity is converted into digital data by an analog/digital converter 36, and then, supplied to the central processing unit 31.

The central processing unit 31 in the first embodiment determines the circuit quality of the digital wireless telephone circuit on the basis of the data of the supplied field intensity of the received signal or the like. If the determined result of the circuit quality is unsatisfactory, the central processing unit 31 makes the pilot lamp of the display unit 35 as the notifying apparatus blink and/or makes the speaker 19 emanate an oscillation sound or the like on the basis of the output signal from the signal generating circuit 33. As a result, the communicator can be informed of the fact that the circuit quality is unsatisfactory.

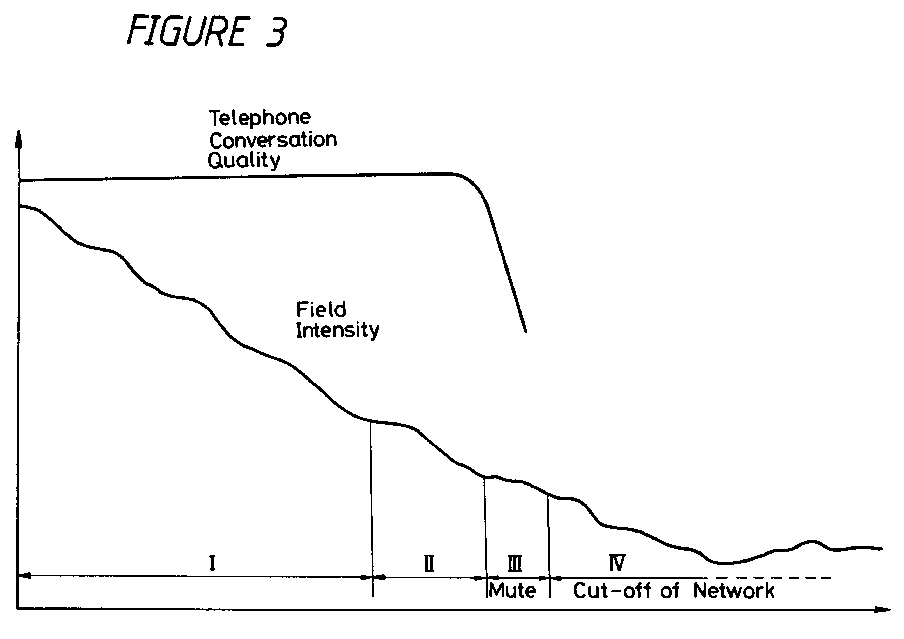

The determination of the circuit quality thereof and an arrangement for the notification thereof will hereinafter be described. First, a relation between the telephone conversation quality and the field intensity of the received signal is shown in FIGURE 3. As shown in FIGURE 3, it is assumed that the receiving condition becomes deteriorated as time passes during the telephone conversation and the field intensity of the received signal RSSI is lowered. Here, in a section I in which the field intensity of the received signal reaches a sufficient level to receive a signal and thus telephone conversation quality can be maintained in a constant condition, no notification is made at all by the notifying apparatus. Then, in a section II of a weak field in which the field intensity of the received signal is slightly lowered relative to the section I, lowering of the field intensity of the received signal is informed by the notifying apparatus on the basis of the control signal of the central processing unit 31. However, in the electric field of the received signal in the section II, the telephone conversation quality as a quality of the voice finally reproduced from the speaker 19 can be maintained in a constant satisfactory condition owing to an error correction by a correction code or the like contained in the received data.

A section III in which the field intensity of the received signal is further lowered than the above-described section appears, the telephone conversation quality is abruptly lowered, and a control is made to bring about a muting over the reproduction of the telephone conversation voice from the speaker 19. This muting control is carried out by, for example, supplying control data from the central processing unit 31 to the audio decoder 17, thereby stopping the supply of the audio data from the audio decoder 17 to the speaker 19. Also at this time, the lowering of the circuit quality is informed by the notifying apparatus on the basis of the control signal from the central processing unit 31.

Further, when the field intensity of the received signal is further lowered and the synchronizing word contained in the demodulated received data cannot be detected accurately during the muting condition in the above-described section III, and the state in which the detection is incapable to be done lasts for 5 seconds, a process to cut off the telephone conversation circuit at that time is carried out as shown in the section IV in FIGURE 3. However, if the field intensity of the received signal became high during the five seconds of muting and the synchronizing data was detected from the received signal, the muting is released and the reproduction of the telephone conversation transmitted from the opponent in the telephone conversation is resumed.

As the field intensity is lowered in the sections I, II, III as shown in FIGURE 3, the notification of the circuit quality to be carried out under the control of the central processing unit 31 is also carried out with change so that the lowering of the circuit quality is recognizable. The change of the notification condition will be described later.

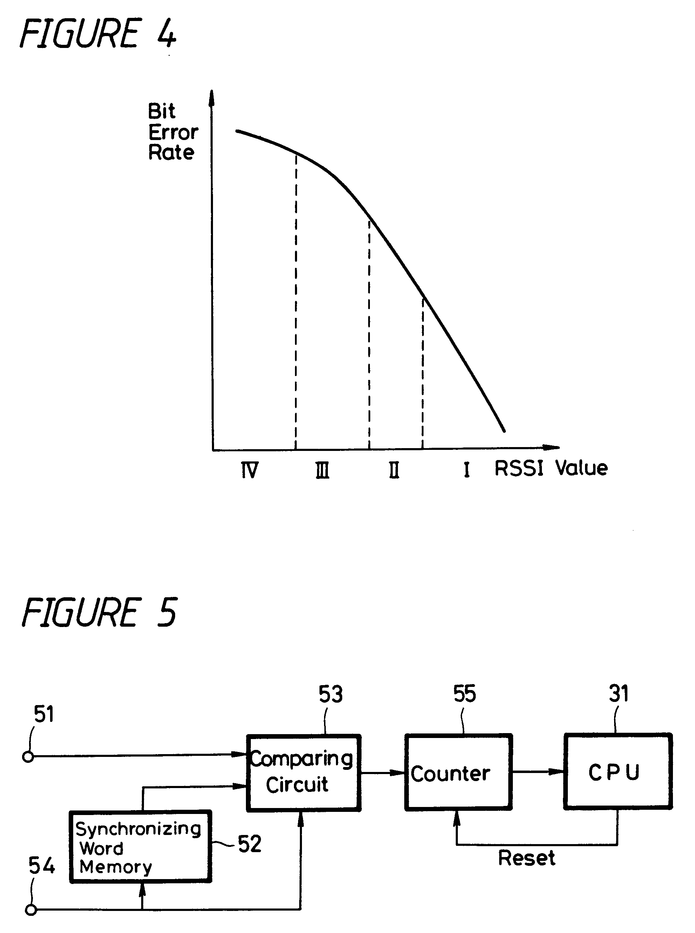

In the above-described first embodiment, while the circuit quality is detected by means of the field intensity of the received signal, the circuit quality may be detected through a bit error rate of the demodulated received data. Now, description will be made on a second embodiment of the digital wireless telephone apparatus according to the present invention of which arrangement is such that the circuit quality is detected through a bit error rate. This second embodiment is similarly constructed as the apparatus of the first embodiment except for the arrangement for detecting the circuit quality. That is, there is a corresponding relation between the field intensity of the received signal RSSI and the bit error rate BER, as shown in FIGURE 4. As shown in FIGURE 4, a division is made to define a section I in which the bit error rate is the least, a section II in which the bit error rate is slightly high, a section III in which the bit error rate becomes so high that the error correction is difficult, and a section IV in which the bit error rate is so high that the voice reproduction from the transmitted data is impossible at all. As a result, the circuit quality can be detected in accordance with the four-state division similarly to the division into the sections I, II, III, IV shown in FIGURE 3 in accordance with the field intensity of the received signal, and thus it is possible to inform the circuit quality.

Here, FIGURE 5 shows one example of an arrangement of a bit error rate detecting circuit. Received data decoded by the channel decoder 16 is fed through a terminal 51 to a comparing circuit 53. The detecting circuit has provided a synchronizing word memory 52 for storing in advance a synchronizing word which is used in the communication circuit of the telephone apparatus. The comparing circuit 53 compares the synchronizing word output from the memory 52 with a synchronizing word actually received. In this case, timing data indicative of timing when the synchronizing word is received is delivered from a terminal 54. In accordance with the timing synchronizing with the timing data, the memory 52 generates data of the synchronizing word and the comparing circuit 53 carries out a comparing operation. If there is a disaccord bit between the synchronizing word within the received signal and the synchronizing word stored in the memory 52 as a result of the comparing operation in the comparing circuit 53, the comparing circuit 53 outputs a predetermined signal. A counter 55 counts the output signal of the comparing circuit 53, and supplies data of the counted number to the central processing unit 31. By the way, the counter 55 can be reset in its count value under the control of the central processing unit 31 at every predetermined period.

The detecting circuit for detecting the bit error is constructed as described above. As a result, the output from the detecting circuit is supplied to the central processing unit 31, the bit error number of the data within the synchronizing word is determined by the central processing unit 31. Depending on which section the number of bit errors is included from the sections I, II, III, IV shown in FIGURE 4, it is possible to determine the current circuit quality.

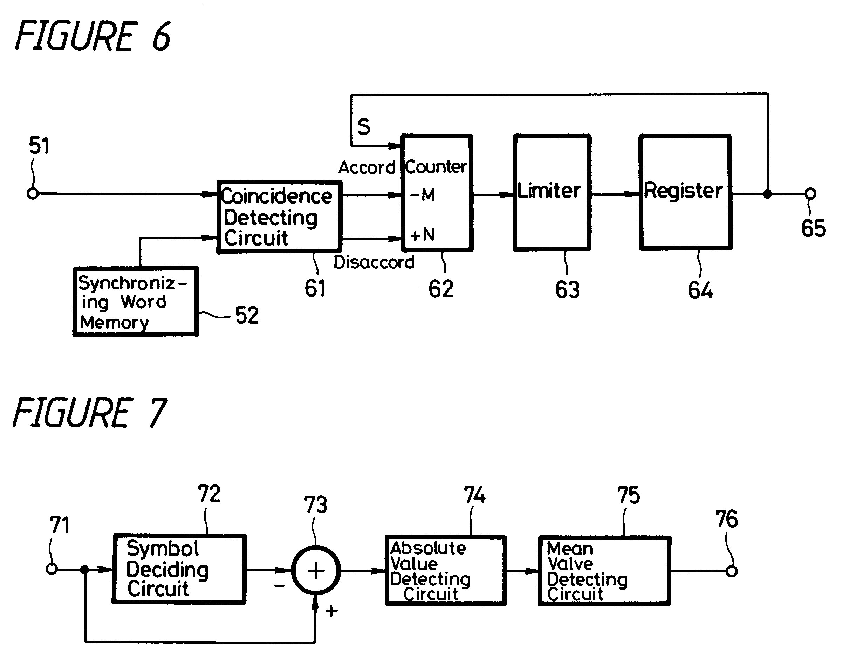

Further, the circuit quality may be determined by detecting a number of accords or disaccords of the synchronizing word itself. The arrangement of the detecting circuit for detecting the accord or disaccord of the synchronizing word itself will be described as a third embodiment of the present invention. By the way, the arrangement of the third embodiment is similarly constructed as that of the first embodiment except for the arrangement of the detecting circuit. In addition, parts corresponding to those of the second embodiment are attached with the same reference numerals and will not described in detail. That is, as, for example, shown in FIGURE 6, data of the received synchronizing word obtained at the terminal 51 and data of the synchronizing word read out from the memory 52 are supplied to a coincidence detecting circuit 61. The coincidence detecting circuit 61 compares the respective supplied synchronizing words and determines whether all the words of one unit are coincident or not. A number of coincident words and a number of disaccord words output from the coincidence detecting circuit 61 are counted by an up-down counter 62. A count operation made by the counter 62 is such one that when one word coincidence between the data of the synchronizing word within the received data and the data of the synchronizing word read out from the memory 52 is detected, a count value is added with -M, while when one word disaccord is detected, the count value is added with +M. Then, the count value S of the counter 62 is subjected to a range limitation by a limiter 63. An output from the limiter 63 is supplied to a register 64 and the count value S stored in the register 64 is fed through a terminal 65 to the central processing unit 31. Further, the count value S stored in the register 64 is returned to the up-down counter 62, and the up-down counter 62 adds the count value S with the aforesaid -M or +M.

As described above, by constructing the detecting circuit for detecting the accord and disaccord of the synchronizing words themselves, the output from the detecting circuit is supplied to the central processing unit 31. Thus, the number of the accord and disaccord of the synchronizing words is determined by the central processing unit 31. If the result of the determination is classified in association with the above-described sections I, II, III, IV which are illustrated in FIGURE 4, then the current circuit quality can be determined.

The circuit quality may be determined by means of a likelihood of the received data. Now, description will be made on a fourth embodiment of the present invention in which there is provided a detecting circuit for detecting the circuit quality by utilizing the likelihood of the received data. By the way, it is similarly constructed as the first embodiment except for the detecting circuit. That is, in case of the wireless telephone apparatus of the digital system as in the fourth embodiment, a signal modulated by a phase shift keying such as the π/4 shift DQPSK modulation or the like is transmitted. Therefore, a symbol position of the transmitted signal becomes any one of a plurality of predetermined phase positions e.g., +45°, +135°, -45°, -135°. Here, detection is made as the likelihood on how much deviation of the symbol position of the signal demodulated upon reception is caused relative to the phase position which should be originally decided, and the circuit quality may be determined by means of the likelihood.

FIGURE 7 is a diagram showing the fourth embodiment of the detecting circuit for detecting the likelihood. A signal demodulated by the detecting circuit 14 or 25 is supplied to a terminal 71, and the demodulated signal delivered to the terminal 71 is fed to a symbol deciding circuit 72. The symbol deciding circuit 72 decides a symbol position in accordance with a phase position of the supplied demodulated signal. For example, if the predetermined phase position is any of +45°, +135°, -45°, -135° and the phase position of the supplied demodulated signal is +50°, since the nearest choice is +45°, then the transmitted symbol is determined as +45°. Data of the symbol position thus determined is fed to a subtracter 73. The data of the symbol position of the demodulated signal which is supplied from the detecting circuit 14 or 25 to the terminal 71 is subtracted by the symbol position which is decided by the symbol deciding circuit 72 to produce the difference in phase. Then, the phase difference signal obtained by the subtracter 73 is formed into an absolute value by an absolute value detecting circuit 74. Thereafter, a mean phase difference is produced by a mean value detecting circuit 75, and the mean phase difference is fed through a terminal 76 to the central control unit 31.

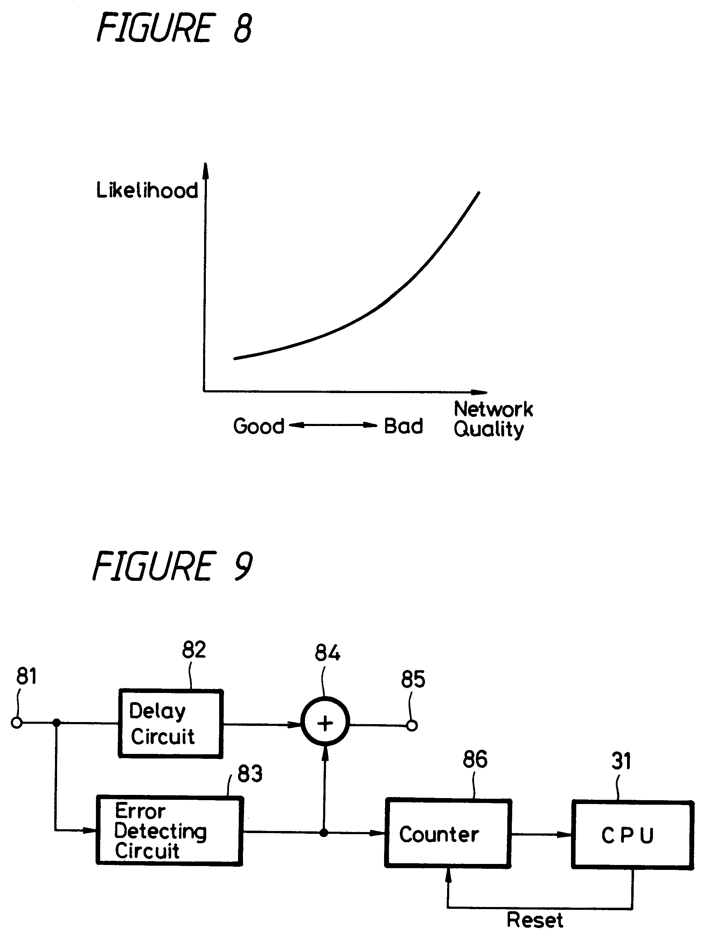

By constructing the detecting circuit for detecting the circuit quality by utilizing the likelihood of the received data, the central processing unit 31 can determine the likelihood which indicates that how much deviation of the phase of the received signal is caused relative to a phase as a reference. As a result, it is possible to determine that the circuit quality becomes deteriorated when the amount of deviation of the phase is large depending on the likelihood. Also in this case, the classification into the above-described sections I, II, III, IV is made on the basis of the likelihood, and it is determined that which position of the sections the detected likelihood is located, by the above-described detecting circuit. Thus, the circuit quality currently used can be accurately determined. FIGURE 8 is a diagram showing a correlation between this likelihood and the circuit quality, from which it is understood that as the likelihood becomes high i.e., the mean phase difference becomes large, the circuit quality becomes deteriorated.

Further, the circuit quality may be detected by a number of error corrections of the bit data that is received and demodulated. Now, description will be made on a fifth embodiment of the present invention in which there is provided a detecting circuit for detecting the circuit quality by utilizing the likelihood of the received data. By the way, it is similarly constructed as the first embodiment except for the detecting circuit. FIGURE 9 is a diagram showing a circuit arrangement of the fifth embodiment. Received data decoded within the channel decoder 16 is fed through a terminal 81 to a delay circuit 82 and an error detecting circuit 83. The received data fed to the error detecting circuit 83 is detected by using an error detection and correction code or the like by the error detecting circuit 83 so as to output a signal that can rise when an error is detected. This signal is fed to an adder 84. The adder 84 is supplied with an output of the delay circuit 82 so that the received data delayed by the delay circuit 82 is added with a signal which results from error detection by the error detecting circuit 83 so as to make an error correction. The corrected received data output from the adder 84 is fed through a terminal 85 to a received data processing system in a later stage. Then, an output signal of the error detecting circuit 83 is fed to a counter 86 and the counter 86 counts a number of error detections on the basis of the output signal supplied from the error detection circuit 83. Count data of the counter 86 is fed to the centra processing unit 31. By the way, the counter 86 is reset under the control of the central processing unit 31 at every predetermined period.

As described above, the detecting circuit is constructed for detecting the circuit quality in accordance with the error correction number, and the output signal is fed from the detecting circuit to the central processing unit 31 so that the number of bit errors in the received data can be determined by the central processing unit 31. When the number of errors is large, the central processing unit 31 can determine that the circuit quality is deteriorated. Also in this case, the classification into the above-described sections I, II, III, IV is made on the basis of the number of errors. Then, determination is made on which section the supplied error number is included in, and the current circuit quality can be accurately determined.

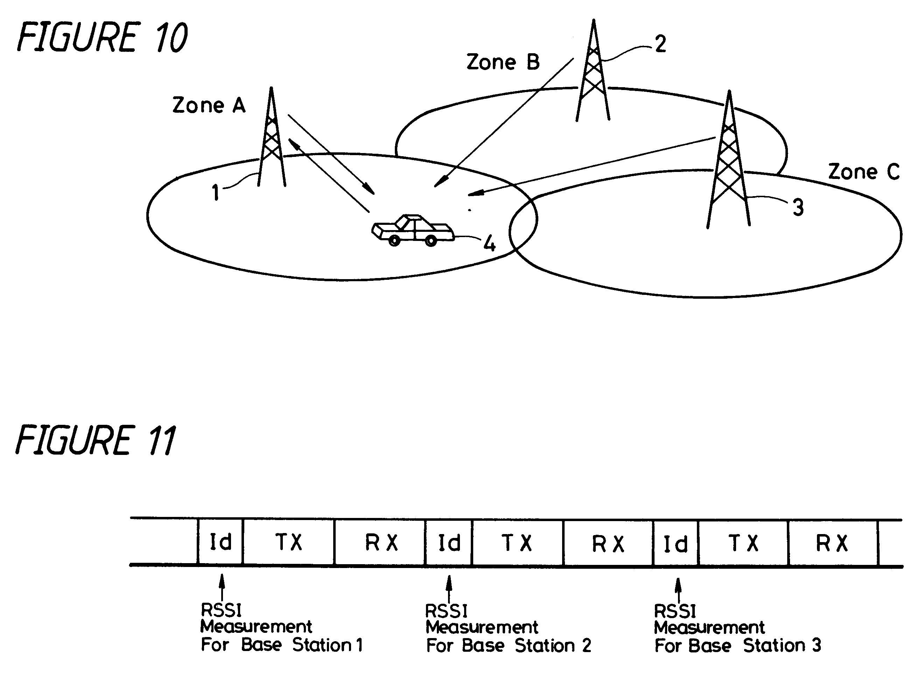

By the way, although the deterioration of the circuit quality is detected by the central processing unit 31 in the above-described respective embodiments of the detecting circuit, if a satisfactory communication can be carried out between a base station with which communication is performed and a base station adjacent thereto, it is possible to change to a wireless telephone circuit for communication with the adjacent base station. As a result, there is little chance to happen cut-off in the circuit, and thus the notification of the deterioration of the circuit quality may not be made. That is, as, for example, shown in FIGURE 10, it is assumed that there are disposed base stations 1, 2, 3 and zones A, B, C around the respective base stations 1, 2, 3 in which telephone communication can be effected. At this time, it is assumed that a car 4 equipped with the digital wireless telephone apparatus according to the present invention is running in the zone A and it sets a digital wireless telephone circuit so as to communicate with the base station 1. Further, it is assumed that the car 4 runs apart from the base station 1, thereby to lower the field intensity of the received signal from the base station 1. Here, the wireless telephone apparatus loaded in the car 4 is always receiving with the central processing unit 31 a control signal of the zone adjacent thereto so as to determine the field intensity of the received signal from the base station in the adjacent zone. Then, if the central processing unit 31 determines an intensity that ensures a satisfactory circuit quality from the fields intensity of the received signal of the adjacent zones, it controls not to notify the deterioration of the circuit quality, and also executes a processing for changing to a communication with the base station in the adjacent zone.

Here, as for the central processing unit 31 of the digital wireless telephone apparatus according to the present invention, description will be made on a discriminating timing for the field intensity of the received signal transmitted from each of the base stations. In the TDMA system to which the telephone apparatus according to the present invention is applied, as shown in FIGURE 11, the timing of transmission and reception is arranged such that a transmission period TX, a reception period RX and an idle period Id are disposed alternately. In the respective idle periods Id, the field intensity of the base station 1 for which the communication circuit is currently set and the field intensities of the adjacent other base stations 2, 3 are measured in order. Then, the central processing unit 31 determines whether change to the communication with another base station is made or not depending on the measured intensities.

Subsequently, an apparatus for notifying the deterioration of the circuit quality thus determined will be described. The digital radio telephone apparatus described as follows will be described with reference to the digital radio telephone apparatus according to the first embodiment described above.

The digital radio telephone apparatus according to the present invention includes the signal generating circuit 33 for generating an oscillation sound or the like as the notifying apparatus of the deterioration of the circuit quality, and the pilot lamp of the display unit 35 for displaying the communication condition. Initially, there will be described an operation of generating the oscillation sound from the speaker 19 based on the output signal from the signal generating circuit 33 under the control of the central processing unit 31. When the signal generating circuit 33 generates the oscillation sound to output the oscillation sound as an audible sound from the speaker 19, the central processing unit 31 controls the signal generating circuit 33 so that the signal generating circuit 33 should generate the oscillation sound from the speaker 19 intermittently. Further, the central processing unit 31 varies intensity (volume) or pitch of the oscillation sound output from the speaker 19 when generated in response to the discriminated circuit quality.

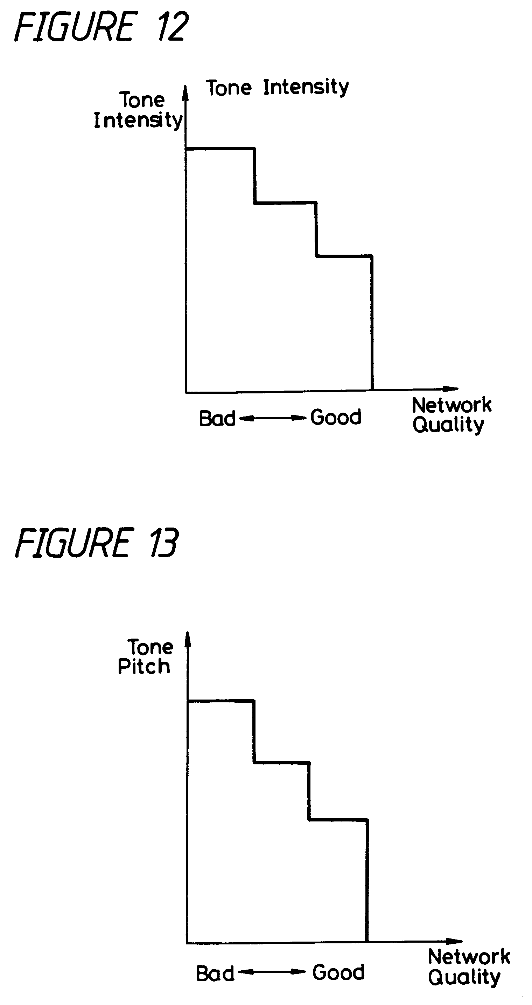

As, for example, shown in FIGURE 12, if the detected circuit quality is necessary to be notified, as the circuit quality becomes deteriorated, the intensity (volume) of the oscillation sound is made large in three steps so that the volume of the oscillation sound for an alarm output from the speaker 19 is varied in the three steps depending on the circuit quality at that time. Alternatively, as shown in FIGURE 13, as the circuit quality becomes deteriorated, the pitch (interval) of the oscillation sound is intensified in three steps so that the interval of the oscillation sound for alarm output from the speaker 19 is varied in the three steps depending on the circuit quality at that time. Furthermore, instead of changing the intensity or interval of the oscillation sound, a tone color itself of the oscillation sound output from the speaker 19 may be varied.

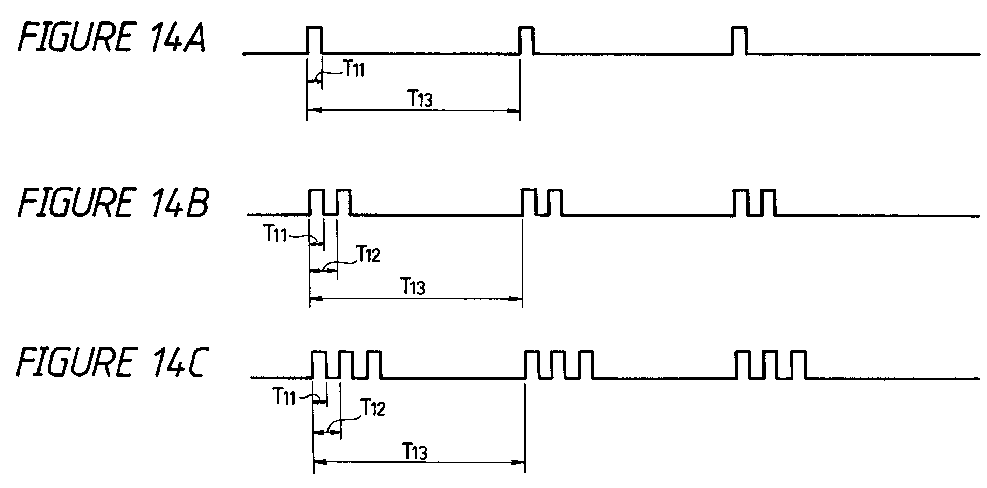

Further, instead of changing the intensity, pitch, tone color of the sound output from the speaker 19 in this way, an output condition such as a period of the output of the oscillation sound may be changed. As, for example, shown in FIGURE 14, a time period T₁₁ (a high level time period is a time period in which the tone rings) in which the oscillation sound rings one time and the period thereof T₁₃ may be set to the same regardless of the circuit quality. Then, in case of a period with the most satisfactory circuit quality in a state in which notification is necessary because the circuit quality is deteriorated, such as a period I shown in FIGURE 3, for example, as shown in FIGURE 14A, the oscillation sound of the time period T₁₁ is output only one time at every period T₁₃. Further, if the circuit quality is deteriorated from the condition by one step and lowered to that in a period II shown in FIGURE 3, as shown in FIGURE 14B, the oscillation sound of the time period T₁₁ at every period T₁₃ is output twice at a very short time interval T₁₂ sequentially. Furthermore, if the circuit quality is deteriorated by still more one step and lowered to that in a period III shown in FIGURE 3, as shown in FIGURE 14C, the oscillation sound of the time period T₁₁ at every period T₁₃ is output at a very short time interval T₁₂ three times sequentially.

Since the notification apparatus is arranged as described above, when the circuit quality is deteriorated in the telephone conversation, an oscillation sound ringing as "Pi" or the like is output while it is superimposed on the telephone conversation voice from the speaker 19, and then the communicator can be informed of the circuit quality through the number of times that the tone "Pi" rings.

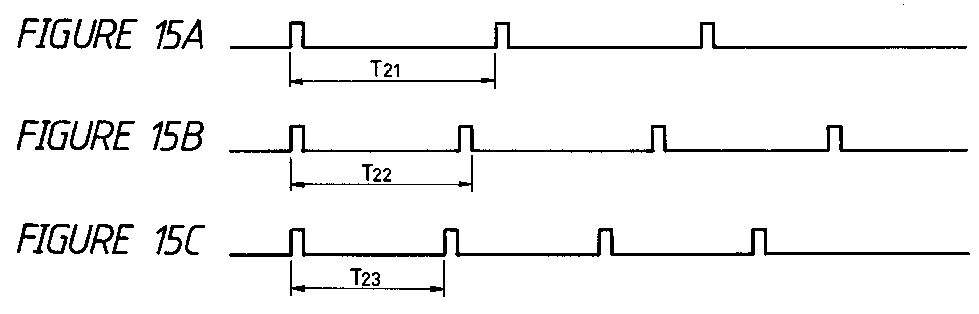

The period itself at which the oscillation sound rings may be varied in response to the circuit quality. Specifically, when it is necessary to notify the deterioration by varying the oscillation sound at, for example, three steps, in case of a period when the circuit quality is the highest in the conditions in which notification is necessary, such as the period I shown in FIGURE 3, as shown in FIGURE 15A, the oscillation sound (a high level time period is a time period in which the tone rings) is output only one time at every period T₂₁. Further, if the circuit quality is deteriorated by one step and lowered to that in the period II shown in FIGURE 3, for example, as shown in FIGURE 15B, the oscillation sound output is made only one time at every period T₂₂ that is shorter than the period T₂₁. Furthermore, if the circuit quality is deteriorated by still more one step and lowered to that in the period III shown in FIGURE 3, for example, as shown in FIGURE 15C, the oscillation sound is output only one time at every period T₂₃ that is shorter than the period T₂₂.

Since the period of the oscillation sound is varied on the basis of a detected result of the circuit quality, the communicator can be informed of the change of the circuit quality through the variation of the period at which the sound "Pi" or the like rings.

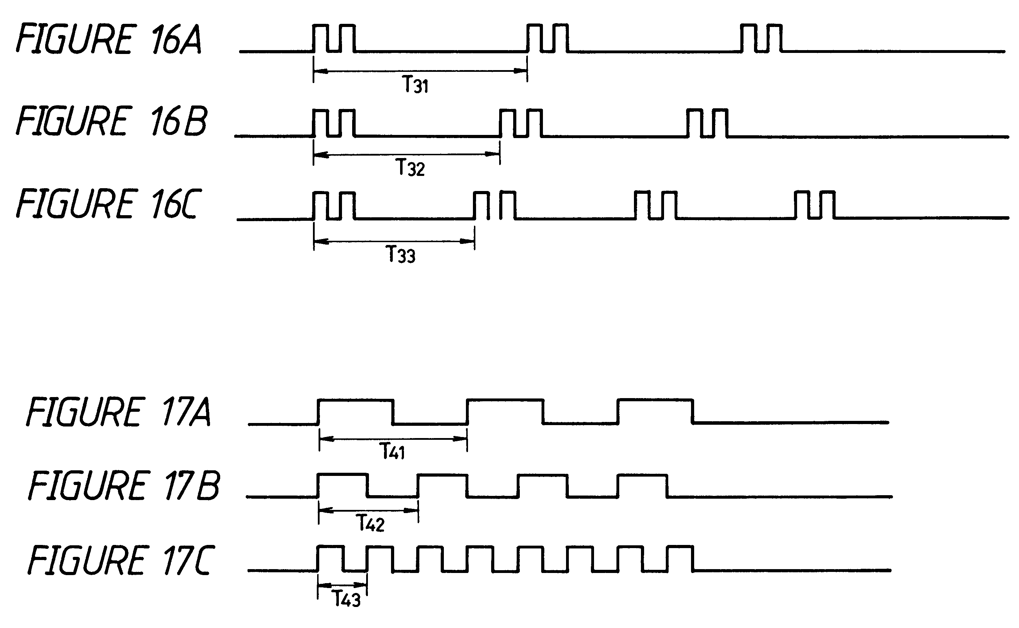

Further, as shown in FIGURE 16, the oscillation sound may be rung two times at every period. Specifically, when the notification is necessary to be made by varying in, for example, three steps, in case of a period with the most satisfactory circuit quality in the conditions in which the notification is necessary, such as the period I shown in FIGURE 3, for example, as shown in FIGURE 16A, the oscillation sound (a high level time period is a time period in which the tone rings) is output twice sequentially at every period T₃₁. Further, if the circuit quality is deteriorated by one step from this condition, e.g., in case of the period II shown in FIGURE 3, for example, as shown in FIGURE 16B, the oscillation sound is output twice sequentially at every period T₃₂ that is shorter than the period T₃₁. Furthermore, if the circuit quality is deteriorated by still more one step, e.g., in case of the period III shown in FIGURE III, for example, as shown in FIGURE 16C, the oscillation sound is output twice sequentially at every period T₃₃ that is shorter than the period T₃₂.

In this case, since sequential tones such as "Pi, Pi" or the like ring at one time, the oscillation sound can be heard more easily than in the case of FIGURES 15A to 15C. It may be arranged that the oscillation sound is not generated during the period with the most satisfactory circuit quality and the oscillation sound is generated when the circuit quality becomes deteriorated.

While in the above description, description has been made on a case in which the oscillation sound is generated from the speaker 19 on the basis of the output signal from the signal generating circuit 33, a pseudo noise may be generated and the pseudo noise may be superimposed on the telephone conversation voice output from the speaker 19. In this case, similarly to the above-described case of the oscillation sound, it is possible to realize the above superimposition in a way such that the generating condition of the pseudo noise is varied (variation in the volume, generation interval, generation time or the like of the noise) in a stepwise manner depending on the circuit quality. By adding the pseudo noise in this way, the noise depending on the circuit quality is superimposed on the telephone conversation voice, similarly to the case in which the wireless telephone apparatus for the above-mentioned analog wireless telephone circuit is utilized. Therefore, similarly to the case in which the wireless telephone apparatus for the above-mentioned analog wireless telephone circuit is utilized, it is possible to guess the circuit condition through the condition of the telephone conversation voice.

When the pseudo noise is added, the audio data may be processed to have an error intentionally by the audio decoder 17 so that a noise is intentionally generated. In this case, information bits of the audio codec which is audio data within digital data to be transmitted through the telephone circuit from the base station side, is made to have an error intentionally from the low significance data depending on the circuit quality. With this arrangement, the noise can be intentionally superimposed under the condition that the clarity of the telephone conversation voice is secured. Specifically, the information bit of the audio codec is classified into bits in accordance with the significance thereof. Therefore, if only data of low significance is made to have a bit error, the noise can be intentionally superimposed under the condition that the clarity of the telephone conversation voice is secured.

Subsequently, description will be made on the light emission condition of the pilot lamp as the display unit 35 for displaying the communication condition. In this example, the pilot lamp is intermittently energized by the central processing unit 31. FUrther, the central processing unit 31 changes a period at which the pilot lamp is turned on in response to the discriminated circuit quality. Specifically, when the notification is necessary to be made by varying in, for example, three steps, e.g., in case of the period I shown in FIGURE 3, for example, if the circuit quality is the highest in the conditions in which notification is necessary, as shown in FIGURE 17A, there is taken place a blinking state (the high level period is a period in which the lamp is turned on) in which turn-on and turn-off are repeated at a period of T₄₁. Further, if the circuit quality is deteriorated by one step, e.g., in case of the period II shown in FIGURE 3, for example, as shown in FIGURE 17B, the pilot lamp is driven for its blinking such that turn-on and turn-off are repeated at a period of T₄₂ that is shorter than the period T₄₁. Furthermore, if the circuit quality is deteriorated by still more one step, e.g., in case of the period III shown in FIGURE 3, for example, as shown in FIGURE 17C, the pilot lamp is driven for its blinking such that turn-on and turn-off are repeated at a period of T₄₃ that is shorter than the period T₄₂.

According to the arrangement, since the central processing unit 31 drives the pilot lamp on the basis of the detected result of the circuit quality such that the pilot lamp is changed from a state in which it blinks slowly to a condition in which it blinks rapidly, it is possible for the speaker to notice that the circuit quality becomes deteriorated.

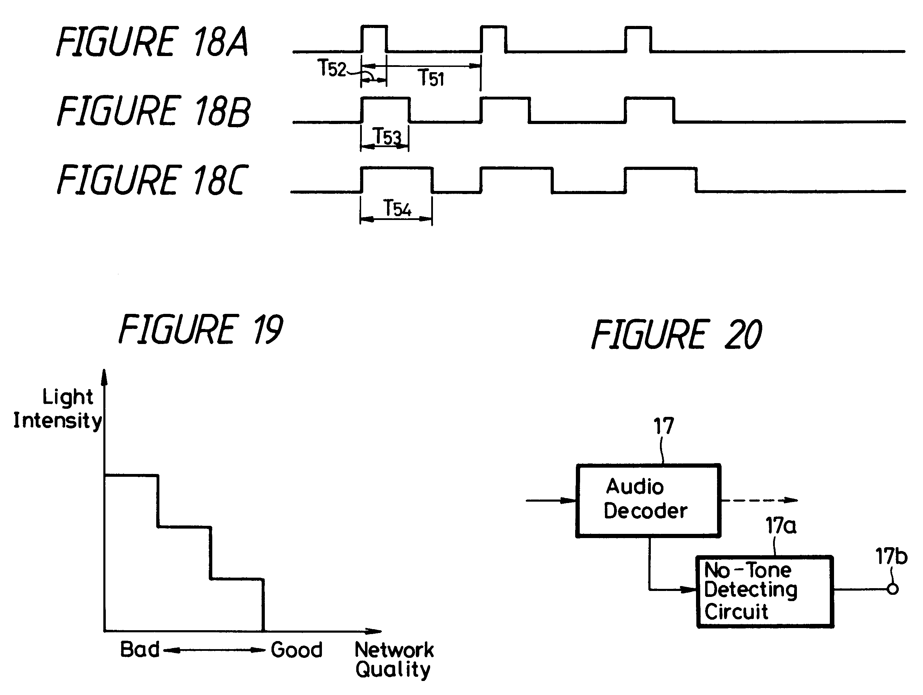

As shown in FIGURES 18A to 18C, a period T₅₁ in which the lamp is blinked in each step may be set to the same and a time period in which the lamp is turned on (i.e., duty) within each of the period T₅₁ may be changed. That is, when the notification is necessary to be made by varying in, for example, three steps, if the circuit quality is the highest in the conditions in which the notification is necessary, e.g., in case of the period I shown in FIGURE 3, for example, as shown in FIGURE 18A, the central processing unit 31 drives the pilot lamp for its blinking such that its turn-on and turn-off are repeated at a period of T₅₁ and the turn-on time period T₅₂ within the state is set to a relatively short time. Further, if the circuit quality is deteriorated by one step, e.g., in case of the period II shown in FIGURE 3, for example, as shown in FIGURE 18B, the central processing unit 31 drives the pilot lamp such that a turn-on time T₅₃ is set to be longer than the time T₅₂. Furthermore, if the. circuit quality is deteriorated by still more one step, e.g., in case of the period III shown in FIGURE 3, for example, as shown in FIGURE 18C, the central processing unit 31 drives the pilot lamp such that a turn-on time T₅₄ is set to be longer than the time T₅₃.

In this way, if the duty of the drive signal supplied to the pilot lamp is changed, similarly to the above case in which the period of light emission of the pilot lamp is changed as described above, since the blinking state of the pilot lamp is changed, the speaker can notice the deterioration of the circuit quality.

Further, instead of notifying the deterioration in the above blinking way, the circuit quality may be displayed step by step through the change of the turned-on brightness. Specifically, as, for example, shown in FIGURE 19, the light intensity (brightness) of the turned-on pilot lamp is intensified in three step as described above as the circuit quality becomes deteriorated so as to notify the deterioration of the circuit quality. In this case, arrangement may be made to combine the periodical blinking that has been described with reference to FIGURES 16A to 16C or FIGURES 17A to 17C. Specifically, the brightness upon being turned on may be varied in a ganged relation with the change of the blinking period of the pilot lamp or the duty of the drive signal supplied to the pilot lamp.

A plurality of the pilot lamps, e.g., three lamps may be disposed so that one of them is turned on, two of them are turned on, three all are turned on, depending on the detected circuit quality. Furthermore, the notification is not made by the blinking of the pilot lamp in the above way but the alarming that the circuit quality is bad is made by display characters or the like on a liquid crystal display panel constituting the display unit 35. When the speaker is informed of the circuit quality by the blinking of the pilot lamp and the change of luminance, if the circuit quality is most satisfactory, then the pilot lamp may be blinked on and off and changed in its blinking state and the luminance at any time in response to deterioration of the circuit quality. When the speaker is notified of the deterioration of the circuit quality by using the pilot lamp, it is necessary to dispose the pilot lamp such that the pilot lamp itself or the light emitted from the pilot lamp is within the field of vision of the speaker in a state that the speaking person uses the digital radio telephone apparatus according to the present invention, i.e., that the speaker 19 and the microphone 41 are respectively disposed adjacent to a pinna and mouth of the speaking person.

By the way, when the oscillation sound or noise is generated from the speaker 19 on the basis of the output signal from the signal generating circuit 33 or the like, the oscillation sound or the noise may be generated only when there is no telephone conversation carried out (or in the state of almost no sound). For example, as shown in FIGURE 20, there is provided a no-tone detecting circuit 17a for detecting a no-tone state on the basis of the audio data supplied to the audio decoder 17, and a detected signal of the no-tone detecting circuit 17a is supplied through a terminal 17b to the central processing unit 31. Under the control of the central processing unit 31, the oscillation sound or the pseudo noise is generated from the speaker 19 on the basis of the output signal from the signal generating circuit 33 or the like only when determination is made as the no-tone condition on the basis of the data supplied from the no-tone detecting circuit 17a. By the way, the no-tone detecting circuit 17a may be arranged to detect the no-tone data which is contained in advance in the audio data to be transmitted, in addition to the detection of the no-tone condition by detecting the actual audio signal condition.

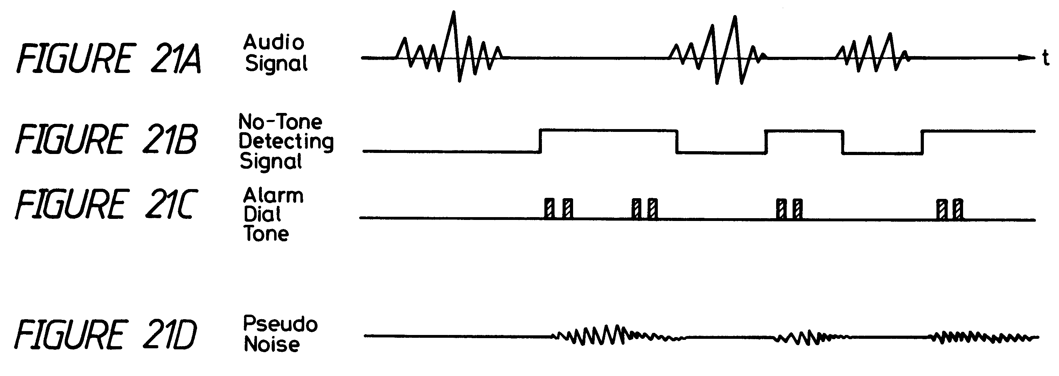

FIGURES 21A to 21D are waveform diagrams showing one example the control condition in this case. For example, it is assumed that an analog waveform of the telephone conversation voice transmitted from the opponent after being subjected to demodulation is in a condition shown in FIGURE 21A. At this time, the no-tone detecting circuit 17a detects the no-tone section (the high level is the no-tone section) as shown in FIGURE 21B. Then, the oscillation sound is intermittently generated from the speaker 19 as shown in FIGURE 21C under the control of the central processing unit 31 only when the no-tone section continues. Alternatively, the pseudo noise may be generated from the speaker 19 as shown in FIGURE 21D only when the no-tone section continues.

In this way, since the oscillation sound and the noise are generated form the speaker 19 only when the no-tone condition continues, the telephone conversation voice is prevented from being interfered at all by the oscillation sound and the noise. Accordingly, it is possible to notify the speaking person, by the audible sound, of the deterioration of the circuit quality under the condition that there is no obstacle at all in listening the telephone conversation voice.

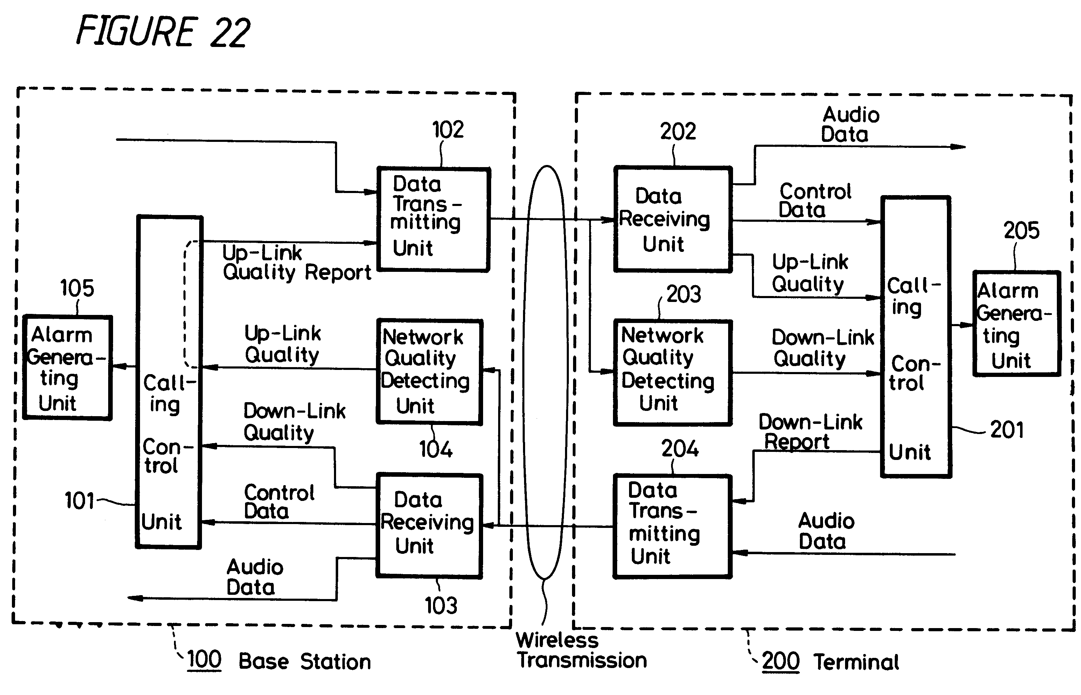

Further, while in the description so far the circuit quality is always directly detected and notified by the telephone apparatus side as the terminal side of the wireless telephone system, data of the circuit quality of the up-link may be transmitted from the base station side so as to make notification of the circuit quality on the basis of the data. Specifically, FIGURE 22 shows a system arrangement in the case. As shown in FIGURE 22, it is assumed that a telephone conversation is carried out between a base station 100 and a telephone machine 200 as a terminal through a digital wireless telephone circuit. The base station side transmits audio data, control data or the like of the down-link from a data transmitting unit 102 to a terminal side on the basis of a control of a calling control unit 101. Further, a data receiving unit 103 receives audio data, control data or the like of the up-link transmitted from the terminal side. A circuit quality detecting unit 104 and an alarm generating unit 105 are provided in the base station 100. The circuit quality detecting unit 104 is made to detect the quality of the up-link through a field intensity of the received signal. When the calling control unit 101 determines that the circuit quality detected by the circuit-quality detection unit 104 is bad, the alarm generating unit 105 notifies the deterioration of the circuit quality, and transmits data of the detected quality of the up-link to the data transmitting unit 102 so as to be transmitted to the terminal side as a down-link in a wireless fashion.

In the terminal 200 side as the wireless telephone apparatus, a data receiving unit 202 receives the audio data, the control data or the like of the down-link from the base station on the basis of the control of the calling control unit 201, and a data transmitting unit 204 transmits the audio data, the control data or the like of the up-link which is to be transmitted to the base station. A circuit quality detecting unit 203 is made to detect the quality of the down-link through the field intensity of the received signal or the like, and supplies to the calling control unit 201 data of the quality of the up-link which was received by the data receiving unit 202. The deterioration of the circuit quality is notified by the alarm generating unit 205 connected to the calling control unit 201, when the deterioration of the circuit quality is made on the down-link by the circuit quality detecting unit 203 and when the deterioration of the circuit quality is made on the up-link through the data of the quality of the up-link transmitted from the base station side.

According to the above arrangement, even if the circuit quality is bad due to any obstacle only on the up-link, for example, this fact can be determined and informed in the terminal side.

Further, as shown in FIGURE 22, data of the quality of the down-link detected by the circuit quality detecting unit 203 in the terminal side may be transmitted through the data transmitting unit 204 to the base station 100 side so that the determination of the quality of the down-link can be made by the base station 100 side. With this arrangement, it is possible to notify the deterioration of the circuit quality due to an obstacle in the down-link even by the alarm generating unit 105 in the base station 100 side.

Furthermore, in each of the above embodiments, notification is made in correspondence with the lowering of the circuit quality. However, if, as, for example, shown in FIGURE 3, the circuit quality is lowered and brought in a state in which the synchronizing word from the base station cannot be detected, such as a state in the period III shown in FIGURE III, and then after the muting condition in which the telephone conversation voice is cut off is taken place, within 5 seconds thereafter (in the case of the system of the present example, if 5 seconds has passed, the circuit is automatically cut off and the state of the period IV in FIGURE 3 is taken place), the circuit quality is recovered to take place the satisfactory condition, i.e., a condition in which the synchronizing word can be again detected, and the temporary muting state is released, then this fact may be notified through the oscillation sound, lamp blinking or the like. With this arrangement, it is possible to determine that the circuit quality is in an unstable condition.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the novel concepts of the present invention as defined in the appended claims.

## Claims

1. A digital radio communication apparatus which sets a digital radio communication circuit for a radio communication of digital data between a base station and said apparatus to perform communication, comprising:
reception means;
quality detection means for detecting quality of said circuit based on an output from said reception means; and
notification means for notifying a speaker of deterioration of a circuit quality on the basis of a detection signal from said quality detecting means, said notification means notifying said speaker of deterioration of said circuit quality when said circuit is set for communication through said base station and said quality detecting means detects deterioration of said circuit quality.

2. An apparatus according to claim 1 further comprising control means for stepwise controlling a notification state of said notification means in response to deterioration of said circuit quality on the basis of a detection signal from said quality detection means.

3. An apparatus according to claim 1, further comprising:
decoding means for decoding a received signal from said reception means;
audio reproducing means for converting an output signal from said decoding means into a sound and reproducing the same; and
control means for driving said notification to notify a speaker of deterioration of said circuit quality.

4. An apparatus according to claim 3, wherein said control means mutes said audio reproducing means on the basis of a detection signal from quality detection means.

5. An apparatus according to claim 3, wherein said control means mutes said audio reproducing means on the basis of a detection signal from said quality detection means and interrupts said circuit when a synchronizing word in a received signal from said reception means cannot be detected for a predetermined period.

6. An apparatus according to claim 3, 4 or 5, wherein said notification means comprises signal generating means for generating a signal used for outputting from said audio reproducing means an audible sound which indicates deterioration of quality of said circuit on the basis of a control signal from said control means and is changed stepwise in response to deterioration of quality of said circuit.

7. An apparatus according to claim 6, wherein said decoding means comprises silent-portion detection means for detecting a silent portion of a signal supplied to said audio reproducing means and said control means controls said notification means on the basis of a detection signal from said silent-portion detection means such that said notification means generates an audible sound.

8. An apparatus according to any one of claims 2 to 7, wherein said notification means generates pseudo noise in response to deterioration of quality of said circuit on the basis of a control signal from said control means.

9. An apparatus according to any one of the preceding claims, wherein when it is determined on the basis of a detection signal from said quality detection means that communication is impossible through said circuit, said circuit is interrupted.

10. An apparatus according to any one of the preceding claims, wherein said quality detection means comprises reception intensity detection means for detecting reception intensity on the basis of an output signal from said reception means and said control means controls said notification means on the basis of a detection signal from said reception intensity detection means.

11. An apparatus according to claim 10 when dependent on claim 3, wherein said reception means comprises first demodulating means for demodulating a signal received by a first antenna and second demodulating means for demodulating a signal received by a second antenna, said first and second demodulating means are selectively switched on the basis of an output signal from said reception intensity detection means, and a received signal from switched demodulating means is supplied to said decoding means.

12. An apparatus according to any one of claims 1 to 9, wherein said quality detection means comprises error rate detecting means for detecting an error rate of an output signal from said reception means and said control means controls said notification means on the basis of a detection signal from said error rate detection means.

13. An apparatus according to claim 12, wherein said error rate detection means comprises a comparing unit for comparing an output signal from said reception means with a reference signal and a count unit for counting an output from said comparing unit.

14. An apparatus according to any one of claims 1 to 9, wherein said quality detecting means comprises error rate detecting means for detecting the number of disagreements of synchronizing words of the output signal from said reception means and said controlling means controls said notification means on the basis of a detection signal from said error rate detecting means.

15. A digital radio communication apparatus according to claim 14, wherein said error rate detecting means comprises memory means in which a synchronizing word used in said circuit is stored, comparing means for comparing a synchronizing word of an output signal from said reception means with the synchronizing word stored in said memory means at a timing such that a synchronizing signal is received, and count means for counting the number of disagreements between the synchronizing word of an output signal from said reception means through said comparing means and the synchronizing word stored in said memory means.

16. A digital radio communication apparatus according to claim 14, wherein said error rate detection means comprises memory means in which a synchronizing word used in said circuit is stored, comparing means for sequentially comparing a synchronizing word of an output signal from said reception means with a synchronizing word stored in said memory means, count means for counting the number of agreements and/or disagreements between said synchronizing word of the output signal from said reception means supplied from said comparing means and said synchronizing word stored in said memory means, and holding means for holding a count value from said count means, and wherein said count value held by said holding means is supplied to said control means and to said count means and said count means carries out an operation for counting the number of agreements and/or disagreements between the synchronizing word of the output signal from said reception means and the synchronizing word stored in said memory means with respect to the count value held by said holding means.

17. An apparatus according to any one of claims 1 to 9, wherein said reception means comprises demodulating means for demodulating a received signal, said quality detection means comprises detection means for detecting likelihood of a phase of a reception symbol of the reception signal from said demodulating means, and said control means controls said notification means on the basis of a detection signal from said detection means.

18. An apparatus according to claim 17, wherein said detection means comprises phase-difference detection means for comparing a reception symbol of a received signal from said demodulating means and a received signal from said reception means to thereby detect a phase difference and phase-error detecting means for calculating a mean value of an absolute value of a phase-difference signal from said phase-difference detecting means.

19. An apparatus according to any one of claims 1 to 9, wherein said quality detection means comprises detection means for detecting an error detection number on the basis of an error detection and correction code included in a received signal of said reception means and said control means control said notification means on the basis of a detection signal from said detection means.

20. An apparatus according to claim 19, wherein said detection means comprises error detection means for detecting an error on the basis of an error detection and correction code included in a received signal of said reception means and count means for counting a signal based on detection of said error detection means and a count value of said count means is supplied to said control means.

21. An apparatus according to any one of the preceding claims, wherein said notification means comprises output means for notifying a speaker by an audible sound changed in response to deterioration of quality of said circuit on the basis of a control signal from said control means.

22. An apparatus according to any one of claims 1 to 20, wherein said notification means comprises display means for notifying a speaker by a display changed in response to deterioration of quality of said circuit on the basis of a control signal from said control means.

23. A digital radio communication system comprising:
a base station having first reception means, first quality detection means for detecting quality of a circuit on the basis of an output signal from said first reception means and first transmission means for transmitting a detection signal from said first quality detection means and audio data; and
at least one communication terminal connected to said base station through a digital radio circuit, having second transmission means for transmitting digital data including audio data to said first reception means, second reception means for receiving a transmitted signal transmitted from said first transmission means, second quality detection means for detecting quality of said circuit on the basis of an output signal from said second reception means, control means supplied with a detection signal from said first quality detection means of a received signal from said second reception means, and notification means supplied with a detection signal from said second quality detection means or a detection signal from said first quality detection means supplied from said control means, said notification means notifying a speaker of deterioration of a circuit quality on the basis of the detection signal supplied from said first or second quality detection means when a digital radio communication circuit is set between said base station and said communication terminal for communication through said base station.

24. A digital radio communication system according to claim 23, wherein said base station further comprises another notification means supplied with a detection signal from said first quality detection means and said another notification means notifies deterioration of quality of said circuit on the basis of a detection signal from said first quality detection means when a circuit quality of a digital radio communication circuit set between said communication terminal and said base station is deteriorated.
